# EUROPEAN PATENT APPLICATION

(11) **EP 1 462 972 A1**
(43) Date of publication of application: **29.09.2004**
(21) Application number: 03251616.3
(22) Date of filing: 17.03.2003
(51) Int. Cl.: G06F 17/60

(54) **Method of demonstrating vehicles having a plurality of suspension options**

(71) Applicant: Meritor Light Vehicle Technology, LLC, Troy, Michigan 48084 (US)
(72) Inventor: Carlstedt, Robert, Rochaester Hills, Michigan 48306 (US); Whitney, Daniel Eugene, Arlington, Massachusetts (US); Smith, Mark, Troy, Michigan 48084 (US); Geib, Eric Stephen, Fenton, Michigan 48430 (US); Foster, Steven, Rochester, Michigan 48306 (US); Clisch, Richard, Canton, Michigan 48187 (US); Shih, Shan, Troy, Michigan 48098 (US); Marcos Munoz, Juan Jose, 31180 Cizur Mayor (Navara), Pamplona (ES)
(74) Representative: Jones, John Bryn

(57) **Abstract**

A system and method for selling vehicles includes an adjustable suspension module on a test drive vehicle. The suspension module preferably is adjusted so that it performs as each of a plurality of available suspension options for the vehicle. The customer is presented with the various options. The suspension module is adjusted to perform as each of the suspension options in which the customer is interested. Once the customer makes the selection, the dealer or seller is able to place an order for the vehicle containing the suspension option chosen by the customer.

## Description

### BACKGROUND OF THE INVENTION

This invention generally relates to a system and method for demonstrating vehicles and for vehicle sales. More particularly, this invention relates to a system and method for presenting customers with a plurality of options for vehicle suspensions when purchasing a vehicle.

There are increasing numbers of types of vehicles available. Passenger cars, sport utility vehicles, pickup trucks and other light duty vehicles are sold in wide varieties. Not only are there many vehicle types available, but there are also many packages or options available with many of the vehicle types.

An example situation is where a light duty vehicle such as a truck is available with several suspension options such as a standard package, a tow package, an off road package, etc. While some customers know the specific package they want, many others are not capable of making a completely informed decision on which option is best for them.

One difficulty in presenting a customer with all possible options is that a dealer would need to keep at least one sample vehicle of each type with each available suspension option for test driving. This presents cost and availability issues, which are not desirable.

There is a need for an efficient manner of presenting various options to a consumer to make the best possible choice in vehicle selection. This invention addresses that need.

### SUMMARY OF THE INVENTION

In general terms, this invention is a system and method of demonstrating a vehicle and for selling a vehicle that is available with one of a plurality of suspension options using an adjustable suspension module. The customer is informed of the plurality of suspension options. A suspension module on a test vehicle is adjusted to perform as a first one of the plurality of options. The customer is then permitted to sample the feel of driving the vehicle with the first option. Then the suspension module is adjusted to perform as at least one other of the plurality of options. The customer is then permitted to sample as many other options as desired.

A system designed according to this invention includes a communication module that allows a dealer to obtain information regarding the various suspension options for a vehicle. An adjustable suspension module is provided on a test drive vehicle. The adjustable suspension module is capable of being adjusted directly or by remote control so that the vehicle suspension performs as at least two of the plurality of suspension options that are available. By adjusting the suspension module accordingly, the customer is able to test drive a single vehicle to observe the ride or feel of at least more than one available suspension option. The communication module preferably also facilitates the dealer placing the order for the vehicle with the suspension option chosen by the customer.

The various features and advantages of this invention will become apparent to those skilled in the art from the following detailed description of the currently preferred embodiment. The drawings that accompany the detailed description can be briefly described as follows.

### BRIEF DESCRIPTION OF THE DRAWINGS

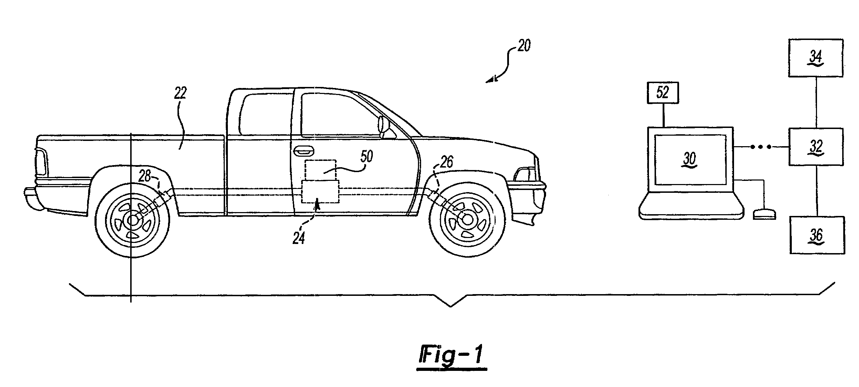

Figure 1 schematically illustrates the system designed according to this invention.
Figure 2 illustrates, in flow chart form, a method of selling vehicles according to this invention.

### DETAILED DESCRIPTION OF THE PREFERRED EMBODIMENT

A system 20 for selling vehicles 22 having a plurality of suspension options includes an adjustable suspension module 24. The suspension module 24 includes a plurality of components 26, 28 that have adjustable responses to road conditions such that the performance of the suspension module 24 simulates a variety of different suspension packages. Example suspension options include a tow package, an off road package or a standard package.

Adjustable suspensions are known. They are typically used on vehicles in a manner that the suspension dynamically adjusts to road conditions to ensure a certain type of ride as desired. The term "active suspension system" is used in this document to refer to active, semi-active, adaptive or adjustable suspensions. For purposes of this discussion, those terms may be considered interchangeable. This invention utilizes such a suspension module in a substantially different way. In one example, the suspension module 24 associated with this invention is preadjusted prior to driving the vehicle and the performance characteristics (such as stiffness, for example) are selected to simulate a specific type of suspension package. In another example, the vehicle includes a controller 50 that is capable of causing changes in the suspension module performance responsive to a user's input or at programmed intervals, for example.

In the preferred arrangement, the vehicle seller or dealer utilizes a communication interface 30, which includes remote communications over the internet or a dealer network intranet, for example. A communications module 32 facilitates retrieval of information from a data base 34 regarding specifications or details on available passive suspension packages for a particular vehicle. The communications module 32 preferably also facilitates communication with an ordering center 36 for placing an order of a vehicle with a chosen suspension package. The communication interface 30 also optionally provides access to a controller interface 52 for controlling controller 50 to effect the desired adjustments.

In use, the system of this invention allows a vehicle dealer or seller to demonstrate a variety of available passive suspension packages for a particular vehicle using a single test-drive vehicle with an adjustable suspension module 24. The flow chart diagram 40 summarizes the preferred method of this invention. The first determination is whether the vehicle of interest to the consumer has a plurality of suspension options available. If so, it is preferred to determine a customer profile.

The customer profile preferably includes learning the customer's driving preferences and typical driving needs for the vehicle of interest. This would include, for example, whether the driver engages in off road driving or frequently tows a trailer. The customer profile may also include information regarding the customer's spending preferences and price range within which the customer wishes to purchase a vehicle. Depending on the customer profile, one or several suspension options may be presented. In some instances, a specific type of engine and transmission may be needed.

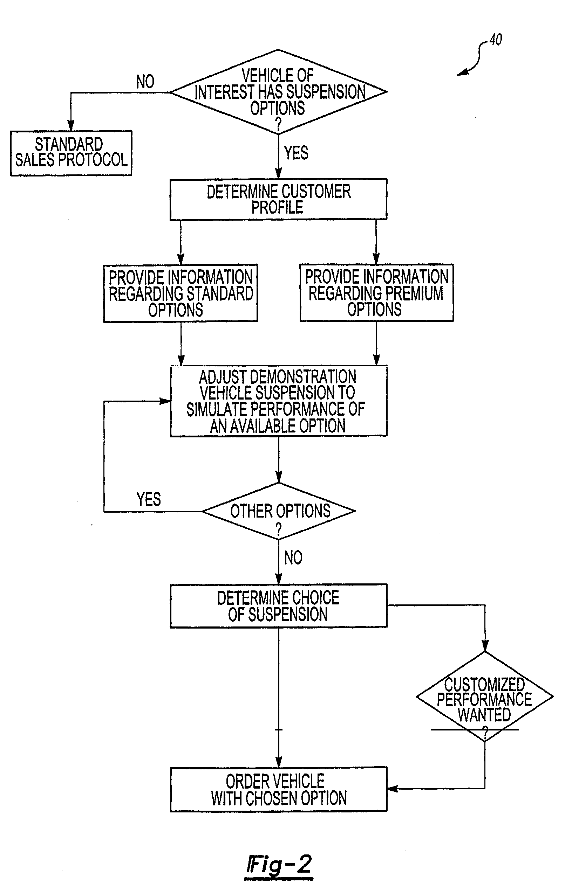

In the illustrated example of Figure 2, standard options may be presented to customers meeting one profile while premium or other options may be presented to customers meeting other profiles. Of course, there can be a variety of customer profiles and the communications module 32 preferably provides a variety of option packages to a dealer or seller for presentation to a customer based upon their profile.

Once the options have been presented to the customer, the customer may sample or test drive a vehicle 22 having an adjustable suspension module 24 that is adjusted into a first one of the suspension options. A test track that is tailored to a specific option may prove useful for giving the best simulation during the test drive. The adjustment of the suspension module 24 will depend upon the parameters of the particular suspension module. Such modules are known and those skilled in the art who have the benefit of this description will be able to appropriately implement the adjustments according to the needs of a particular situation.

After the customer has been allowed to test drive the vehicle 22 with the suspension module 24 adjusted to perform as a first one of the options, one or several more options may be presented. The suspension module 24 preferably is adjusted so that the suspension performs as if it were another one of the available options. After the customer has sampled as many options as desired, the choice for the suspension option is made and the dealer or seller preferably orders the vehicle with the chosen option.

In one example, not only are there several suspension options but each option may come with specific performance characteristics. A system designed according to this invention further allows the dealer or seller to present such customized options to the customer during the sales phase. Additionally, the information module or data base 34 preferably is accessible by a dealer so that adjustments may be made at the dealer's location to various components of the suspension module to customize the performance of the suspension for the customer.

Accordingly, this invention facilitates making specific adjustments to a suspension to meet a customer's desires or requirements. This can be accomplished by the original equipment manufacturer or supplier before, during or after assembly of the suspension. This invention facilitates a more economic process to accomplish any customization needed to fulfill an order.

Other aspects of one example system designed according to this invention include compiling preference data about many customers. The inventive system also facilitates recommending other aspects of the purchase such as engines and transmissions that would be appropriate for uses like off-road and towing that the customer says he will do while testing suspensions. Additionally, a dealer or seller may figure out what suspension behavior the customer really wants but is not available from any of the standard passive options but which could be delivered by a properly configured active suspension.

The preceding description is exemplary rather than limiting in nature. Variations and modifications to the disclosed embodiment may become apparent to those skilled in the art that do not necessarily depart from the essence of this invention. The scope of legal protection given to this invention can only be determined by studying the following claims.

## Claims

1. A system for demonstrating different suspension options on a vehicle, the system comprising:
a suspension adjustment module, a data module and a communication module which enables a user to communicate with both the data module and suspension adjustment module,
the data module comprising information relating to the plurality of suspension options, and
the suspension adjustment module being supportable on a demonstration vehicle that is adjustable to demonstrate two or more of the available suspension options.

2. A system for selling vehicles having a plurality of available suspension options, comprising:
a communication module that facilitates a user obtaining information and providing information;
a data module that is accessible using the communications module, the data module providing information regarding the plurality of suspension options available; and
an adjustable suspension module supportable on a demonstration vehicle that is adjustable to perform as the available suspension options such that a customer is permitted to sample the various suspension options using the demonstration vehicle.

3. The system of claim 1 or 2, including an ordering module that facilitates a user placing an order for a vehicle containing a suspension module chosen by the customer.

4. The system of claim 1, 2 or 3, including a customer profile module that indicates a customer profile based upon predetermined information, such as in function provided by the customer, and provides a listing of available suspension options that correspond to the customer profile.

5. The system of any preceding claim, in which the data module and the communication module are supported on a demonstration vehicle.

6. The system of any preceding claim, including a controller that is supported on the vehicle and is used to make adjustments to the suspension module.

7. The system of claim 5, wherein the controller is programmed to automatically make the adjustments, and or wherein the controller makes the adjustments responsive to user input.

8. A method of selling a vehicle that includes one of a plurality of available suspension options using an adjustable suspension module, comprising the steps of:
(A) informing a customer of the plurality of suspension options;
(B) adjusting the suspension module to perform as a first one of the plurality of options;
(C) permitting the customer to sample the first option;
(D) adjusting the suspension module to perform as at least one other of the plurality of options; and
(E) permitting the customer to sample the other option.

9. The method of claim 8, including determining the customer's choice ordering the vehicle and specifying a chosen one of the suspension options to be included with the vehicle, and or wherein the suspension module is supported on a demonstration vehicle and steps (B) through (E) are performed using the demonstration vehicle.

10. The method of claim 8 or 9, including determining a customer profile and making a recommendation of one of the suspension options based upon the customer profile, and or wherein the suspension options are for passive suspension systems and the adjustable suspension module comprises an active suspension system and wherein step (B) includes setting parameters of the suspension module so that the active suspension system performs like the first one of the plurality of passive suspension options.
